# EUROPEAN PATENT SPECIFICATION

(11) **EP 3 315 744 B1**
(45) Date of publication and mention of the grant of the patent: **27.11.2019**
(21) Application number: 16881621.3
(22) Date of filing: 13.12.2016
(51) Int. Cl.: F02C 7/00, B08B 3/08, F01D 5/18, F01D 9/02, F01D 25/00, B24C 1/00, B08B 9/00, B08B 3/12

(54) **TURBINE BLADE MAINTENANCE METHOD**
TURBINENSCHAUFELWARTUNGSVERFAHREN
PROCÉDÉ D'ENTRETIEN D'AUBE DE TURBINE

(30) Priority: 28.12.2015 JP 2015256926
(43) Date of publication of application: 02.05.2018
(73) Proprietor: Mitsubishi Hitachi Power Systems, Ltd., Yokohama-shi, Kanagawa 220-8401 (JP)
(72) Inventor: UEMURA, Yoshitaka, Yokohama-shi Kanagawa 220-8401 (JP); INOUE, Yoshiyuki, Yokohama-shi Kanagawa 220-8401 (JP)
(74) Representative: Henkel & Partner mbB
(86) International application number: PCT/JP2016/087065
(87) International publication number: WO 2017/115642

(56) References cited:
- EP-A1- 1 387 040
- EP-A1- 2 241 727
- EP-A2- 1 286 020
- EP-A2- 2 107 370
- JP-A- 2003 155 935
- JP-A- 2012 062 834
- JP-A- 2012 062 834
- US-A- 5 507 306

## Description

### Field

The present invention relates to a turbine blade maintenance method that includes internal cooling flow channels for circulating a refrigerant.

### Background

Conventionally, as a maintenance method of this kind of turbine blade, there has been known such a technique that coating such as a bonding coating film consisting of metallic coating applied to an external surface of the turbine blade and a thermal-barrier top coating film consisting of ceramic coating applied to the outside of the bonding coating film is removed once by chemical treatment or mechanical treatment, and new coating is applied thereto again. For example, WO 2009/101690 A discloses a technique in which scale such as corrosive oxide or the like adhering to an external surface of the coating or inner wall surfaces of cooling medium channels formed inside the turbine blade are removed by a plurality of types of chemical treatment, residual stress of the turbine blade is removed by heat treatment, and the coating is removed by chemical treatment. The reason for removing the residual stress from the turbine blade before removal of the coating is to prevent occurrence of stress corrosion cracking in the turbine blade in the chemical treatment for coating removal.

EP 2 241 727 A1 discloses a method of inspection and repair of a metal component of a gas turbine engine, the method comprises removing the existing protective coatings, especially by blast treatment, and cleaning the surface. EP 1 286 020 A2 discloses a method for repairing an aperture gas turbine component, the method comprises cleaning and stress relief before removing an existing coating.

### Summary

### Technical Problem

Corrosive scale adhering to the surface of the turbine blade (the coating surface) and to inner wall surfaces of the inner cooling channels at the time of operating the turbine may cause high-temperature corrosion in the heat treatment process described above. The high-temperature corrosion may cause a damage in the turbine blade at the time of re-operation of the turbine. Therefore, the corrosive scale adhering to the turbine blade needs to be removed reliably before the heat treatment process. However, there may be a case in which if water-soluble scale adhering to the turbine blade is removed, occurrence of the damage can be avoided sufficiently depending on the operating conditions of the turbine. Even in such a case, use of the method of removing scale adhering to the turbine blade by plural and various types of chemical treatment and water washing treatment leads to an increase in the number of processes and complication of the entire maintenance process, which is not preferable.

The present invention has been achieved in view of the above problems, and a main object of the present invention is to, in a maintenance process of a turbine blade including internal cooling flow channels for circulating a refrigerant, remove water-soluble scale adhering to the turbine blade favorably by a simpler method, before applying the heat treatment to the turbine blade. Solution to Problem

To solve the above problems and achieve the object, a turbine blade maintenance method according to the present invention includes the features of claim 1, the turbine blade comprising internal cooling flow channels for circulating a refrigerant, the method comprising a scale cleaning process where ultrasonic cleaning treatment in which the turbine blade is immersed in a water basin and ultrasonic sound waves are conducted into the water basin to clean the turbine blade, and pressurized-water cleaning treatment in which pressurized water is sprayed into the internal cooling flow channels after performing the ultrasonic cleaning treatment are performed at least once, and a residual-stress removing process where heat treatment is performed so as to remove residual stress in the turbine blade after performing the scale cleaning process.

According to the turbine blade maintenance method of the present invention, before applying the heat treatment for removing the residual stress to the turbine blade, the scale cleaning process is performed. In the scale cleaning process, the ultrasonic cleaning treatment in which the turbine blade is immersed in the water basin and ultrasonic sound waves are conducted into the water basin to clean the turbine blade, and the pressurized-water cleaning treatment to spray pressurized water into the internal cooling flow channels after the ultrasonic cleaning treatment are performed at least once. Accordingly, water-soluble scale adhering to an outer periphery of the turbine blade and inner wall surfaces of the internal cooling flow channels can be peeled favorably by the ultrasonic cleaning treatment. The water-soluble scale remaining in the internal cooling flow channels can be reliably removed by the pressurized-water cleaning treatment. Therefore, according to the present invention, in the maintenance process of a turbine blade including the internal cooling flow channels for circulating the refrigerant, before applying the heat treatment to the turbine blade, water-soluble scale adhering to the turbine blade can be favorably removed by a simpler method.

In the turbine blade maintenance method according to the present invention, the turbine blade includes a protective layer consisting of a first coating layer applied to an external surface and a second coating layer applied to outside of the first coating layer, and the repairing method comprises a second coating-layer removing process for removing the second coating layer by blast treatment before the residual-stress removing process. Accordingly, the water-soluble scale adhering to the second coating layer is favorably removed together with the second coating layer by the blast treatment for removing the second coating layer before applying the heat treatment for removing the residual stress to the turbine blade. Meanwhile, water-soluble scale adhering to the outer periphery of the turbine blade and the internal cooling flow channels other than the second coating layer, which cannot be removed by the blast treatment, is removed by the scale cleaning process before applying the heat treatment for removing the residual stress to the turbine blade. In this manner, the turbine blade maintenance method according to the present invention is applied to the turbine blade including the second coating layer. Either a second coating-layer removing process or the scale cleaning process can be performed first, so long as the process is performed before performing the residual-stress removing process.

In the turbine blade maintenance method according to the present invention, the turbine blade may be a rotor blade, the internal cooling flow channels may open in a blade tip and a blade root of the turbine blade, and in the pressurized-water cleaning treatment, pressurized water may be sprayed into the internal cooling flow channels from any one of openings in the blade tip and openings in the blade root. As a result, water-soluble scale adhering to the internal cooling flow channels can be favorably removed evenly from the blade tip to the blade root.

In the turbine blade maintenance method according to the present invention, in the pressurized-water cleaning treatment, pressurized water may be sprayed from one of the openings in the blade tip and the openings in the blade root in a state where the turbine blade is supported so that a longitudinal direction is along the vertical direction, one of the openings being located on an upper side in a vertical direction. As a result, water-soluble scale adhering to the internal cooling flow channels can be washed away from the upper side to a lower side in the vertical direction and removed favorably by spraying the pressurized water.

In the turbine blade maintenance method according to the present invention, in the scale cleaning process, after a support direction is switched so that upper and lower sides in the vertical direction of the turbine blade are inverted with respect to previous pressurized-water cleaning treatment, next pressurized-water cleaning treatment may be performed. As a result, when the pressurized-water cleaning treatment is performed plural times, the flow direction of the pressurized water to be supplied into the internal cooling flow channels can be changed. Accordingly, water-soluble scale adhering to the internal cooling flow channels can be removed quite favorably.

In the turbine blade maintenance method according to the present invention, in the scale cleaning process, first pressurized-water cleaning treatment may be performed in a state where the turbine blade is supported so that the blade tip is on the upper side in the vertical direction. Accordingly, it can be suppressed more favorably that the water-soluble scale clogs the internal cooling flow channels on the blade tip side, where the flow channels are generally narrowed down as compared with the blade root side.

### Advantageous Effects of Invention

According to the turbine blade maintenance method of the present invention, it is possible to, in a maintenance process of a turbine blade including internal cooling flow channels for circulating a refrigerant, remove water-soluble scale adhering to the turbine blade favorably by a simpler method, before applying the heat treatment to the turbine blade.

### Brief Description of Drawings

FIG. 1 is a sectional view illustrating a gas turbine rotor blade that is an object of a turbine blade maintenance method according to an embodiment of the present invention.
FIG. 2 is a schematic diagram illustrating a protective-layer removing system that performs a protective-layer removing process as the turbine blade maintenance method according to the embodiment of the present invention.
FIG. 3 is a flowchart illustrating an example of the protective-layer removing process.
FIG. 4 is a flowchart illustrating an example of a fouling cleaning process included in the protective-layer removing process.

### Description of Embodiments

Exemplary embodiments of a turbine blade maintenance method according to the present invention will be explained below in detail with reference to the accompanying drawings. The present invention is not limited to the embodiments.

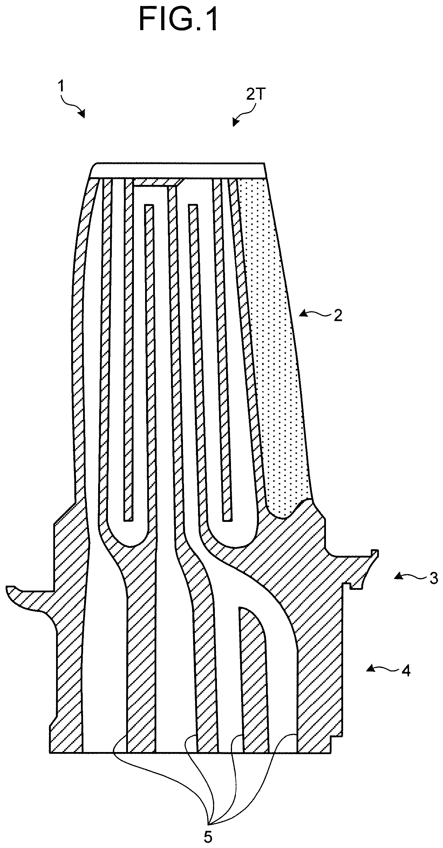

FIG. 1 is a sectional view illustrating a turbine blade 1 that is an object of a turbine blade maintenance method according to an embodiment of the present invention. The turbine blade 1 is a rotor blade to be used on front stages (for example, first and second stages) of a known gas turbine, and is arranged in a turbine chamber (not illustrated). However, the object of the turbine blade maintenance method according to the present invention is not limited to the turbine blade 1. For example, the object of the turbine blade maintenance method can be a turbine rotor blade installed on rear stages of the gas turbine, or a gas turbine vane, or a rotor blade or a turbine vane used in a steam turbine.

The turbine blade 1 includes, as illustrated in FIG. 1, a blade portion 2 that forms a profile, a platform 3 bonded with the blade portion 2, and a shank 4 extended from the platform 3 to the side opposite to the blade portion 2. On the side of the shank 4 opposite to the platform 3 (the lower side in FIG. 1), although not illustrated in FIG. 1, a blade root to be attached to a rotor disk of the gas turbine is formed.

In the turbine blade 1, a plurality of internal cooling flow channels 5 extending from a blade root (not illustrated) to a blade tip 2T being an end of the blade portion 2 are formed. As illustrated in FIG. 1, the internal cooling flow channels 5 are configured as serpentine flow channels, parts of which are formed so as to meander inside the blade portion 2. The internal cooling flow channels 5 respectively open in the blade root and the blade tip 2T, and cooling air is supplied into the internal cooling flow channels 5 via openings in the blade root from a rotor (not illustrated). The cooling air supplied into the internal cooling flow channels 5 passes through the shank 4, the platform 3, and the inside of the blade portion 2, and is discharged to the outside of the turbine blade 1 from the openings in the blade tip 2T and a plurality of outlet holes formed in a leading edge and a trailing edge (each of which is not illustrated) of the blade portion 2. Accordingly, the turbine blades 1 on the front stages, which are exposed to a high-temperature environment for a long period of time, can be cooled effectively. The openings in the blade root (not illustrated) can open downward in FIG. 1, or open in either direction of right and left in FIG. 1.

The turbine blade 1 configured in this manner includes a protective layer consisting of a bonding coating layer (first coating layer) coated on an outer periphery of the blade portion 2 and a top coating layer (second coating layer) coated on the outside of the bonding coating layer. The bonding coating layer are formed of, for example, an MCrAlY alloy (M is Co, Ni, or a combination of these elements), and functions as a metal bonding layer that enhances adhesion between the blade portion 2 and the top coating layer. The top coating layer is coating made of zirconia (ZrO₂) ceramic, and functions as a thermal barrier coating (TBC) film having a thermal barrier property. Accordingly, heat resistance of the turbine blade 1 can be improved.

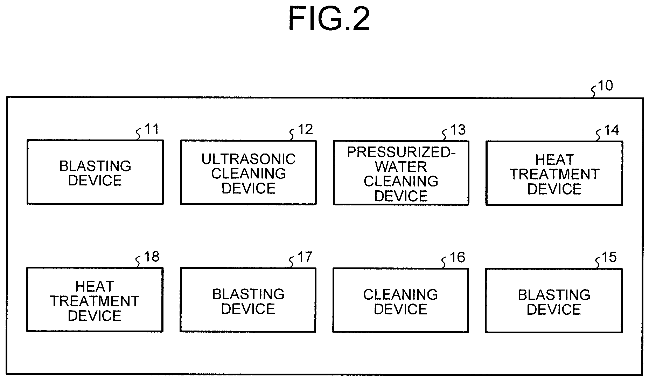

However, deterioration may occur in the protective layer of the turbine blade 1 which has been exposed to a high-temperature environment for a long period of time. Therefore, after the turbine blade 1 has been used for a certain period, a maintenance (reproduction) work is required in which, after the protective layer is removed once from the turbine blade 1, new coating is applied thereto again. A series of processes for removing the protective layer in the maintenance (reproduction) work of the turbine blade 1 is described below with reference to FIG. 2 to FIG. 4.

FIG. 2 is a schematic diagram illustrating a protective-layer removing system 10 that performs a protective-layer removing process as the turbine blade maintenance method according to the embodiment of the present invention. The protective-layer removing system 10 includes a blasting device 11 that applies blast treatment to the turbine blade 1 for removing the top coating layer, an ultrasonic cleaning device 12 that applies ultrasonic cleaning treatment to the turbine blade 1, a pressurized-water cleaning device 13 that applies pressurized-water cleaning to the turbine blade 1, a heat treatment device 14 that applies heat treatment for removing residual stress to the turbine blade 1, a blasting device 15 that applies blast treatment for removing an oxide film to the turbine blade 1, a cleaning device 16 that applies pickling treatment or the like for removing the bonding coating layer to the turbine blade 1, a blasting device 17 that applies blast treatment for cleaning the turbine blade 1, and a heat treatment device 18 that applies heat treatment for conducting a heat tinting test to the turbine blade 1. Note that the blasting devices 11, 15, and 17 can function as any one of the devices.

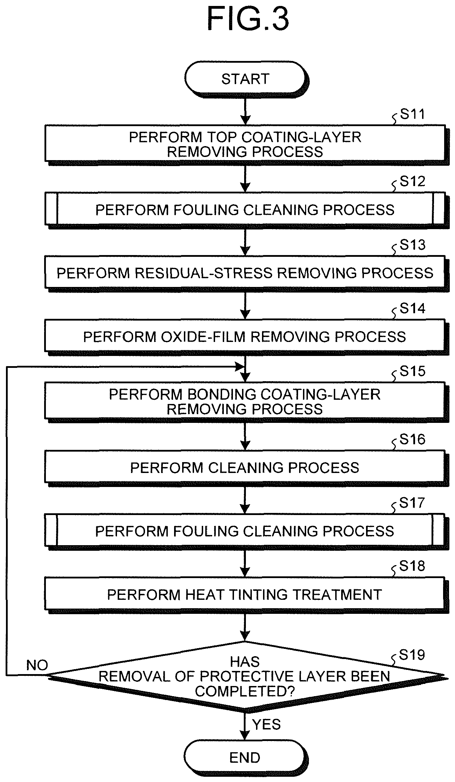

FIG. 3 is a flowchart illustrating an example of the protective-layer removing process. In the protective-layer removing process, a top coating-layer removing process (second coating-layer removing process) for removing the top coating layer coated on the outer periphery is first performed by applying the blast treatment to the turbine blade 1 using the blasting device 11 (Step S11). In the present embodiment, the blast treatment is performed using an alumina projection material. Accordingly, the top coating layer being ceramic coating can be favorably removed. The projection material to be used for the blast treatment is not limited to the alumina projection material.

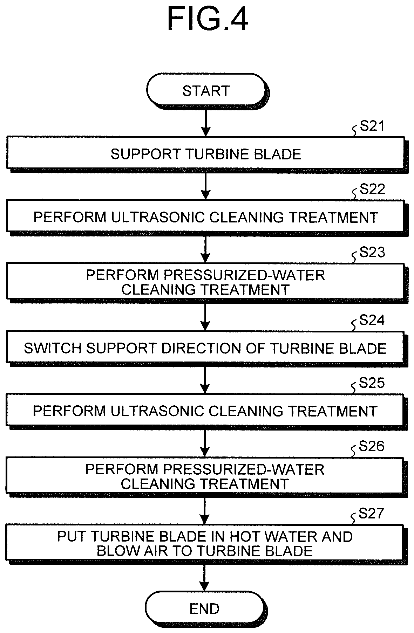

In the top coating-layer removing process at Step S11, water-soluble scale adhering to the external surface of the top coating layer of the turbine blade 1 can be removed together with the top coating layer during operation of the gas turbine. However, water-soluble scale adhering to the inner wall surfaces of the internal cooling flow channels 5, the platform 3, and the shank 4 cannot be removed by the top coating-layer removing process. In this state, if heat treatment for removing residual stress (Step S13) described later is applied to the turbine blade 1, high-temperature corrosion may occur in places to which the water-soluble scale adheres. The high-temperature corrosion may cause a damage in the turbine blade 1 during re-operation of the gas turbine. Therefore, it is required to remove water-soluble scale reliably from the turbine blade 1 before performing the heat treatment, so as to prevent occurrence of the high-temperature corrosion, particularly for the turbine blade 1 of the present embodiment that is used in the front stages and exposed to a high temperature. Therefore, in the protective-layer removing process according to the present embodiment, a fouling cleaning process illustrated in FIG. 4 is performed using the ultrasonic cleaning device 12 and the pressurized-water cleaning device 13 (Step S12), subsequent to the top coating-layer removing process. The fouling cleaning process is described later in detail. By performing the fouling cleaning process, water-soluble scale adhering to the turbine blade 1 can be favorably removed.

After performing the fouling cleaning process, a residual-stress removing process is performed in which heat treatment for removing the residual stress is applied to the turbine blade 1 using the heat treatment device 14 (Step S13). In the residual-stress removing process, by applying the heat treatment to the turbine blade 1 using a vacuum heat treatment device 14, the residual stress is removed from the turbine blade 1. Accordingly, occurrence of stress corrosion cracking in the turbine blade 1 can be favorably suppressed by the pickling treatment in a bonding coating-layer removing process (Step S15) described later. Next, an oxide-film removing process is performed in which an oxide film generated in the turbine blade 1 by the heat treatment in the residual-stress removing process is removed by the blast treatment of the blasting device 15 (Step S14). Accordingly, the effect of the pickling treatment in the bonding coating-layer removing process (Step S15) described later can be improved.

Subsequently, the pickling treatment is applied to the turbine blade 1 using the cleaning device 16, and the bonding coating-layer removing process for removing the bonding coating layer from the blade portion 2 (first coating-layer removing process) is performed (Step S15). In the bonding coating-layer removing process, by immersing the turbine blade 1 in a liquid basin (not illustrated) in which a highly acidic cleaning solution (for example, hydrochloric acid) contained in the cleaning device 16 is filled, the bonding coating layer is removed from the turbine blade 1. After the pickling treatment, cleaning treatment using water and neutralization treatment using an alkaline cleaning solution are applied to the turbine blade 1 by the cleaning device 16, and after the highly acidic cleaning solution adhering to the turbine blade 1 is removed, the turbine blade 1 is subjected to the next process.

Further, the blast treatment is applied to the turbine blade 1 using the blasting device 17, and a cleaning process to clean the turbine blade 1 is performed (Step S16). The cleaning process is performed in order to remove a reactive layer generated on the external surface of the turbine blade 1 due to the pickling treatment in the bonding coating-layer removing process at Step S15 and residues of the bonding coating layer that have not been completely removed by the pickling treatment. Accordingly, the external surface of the turbine blade 1 can be cleaned, thereby enabling to conduct the heat tinting test (heat tinting) described later more properly.

A part of blasted particles used in the cleaning process described above may enter into the internal cooling flow channels 5 of the turbine blade 1, and stick to the inner wall surfaces by the highly acidic cleaning solution remaining in the internal cooling flow channels 5. Therefore, in the protective-layer removing process according to the present embodiment, the fouling cleaning process illustrated in FIG. 4 is performed again using the ultrasonic cleaning device 12 and the pressurized-water cleaning device 13 (Step S17), in order to remove the blasted particles adhering in the internal cooling flow channels 5 after performing the cleaning process (Step S16). The fouling cleaning process is described later in detail. By performing the fouling cleaning process, the blasted particles adhering in the internal cooling flow channels 5 of the turbine blade 1 can be favorably removed.

After performing the fouling cleaning process, the heat tinting treatment (heat tinting) for testing whether the protective layer (bonding coating layer) does not remain in the turbine blade 1 is applied to the turbine blade 1 using the heat treatment device 18 (Step S18), to determine whether removal of the protective layer (bonding coating layer) has been completed (Step S19). At Step S19, by performing visual check regarding the tinted state of the external surface of the heated turbine blade 1, the presence of the protective layer (bonding coating layer) is checked. If it is determined that removal of the protective layer (bonding coating layer) has not been completed by the visual check, Step S15 and its subsequent steps are repeated again. If it is determined that removal of the protective layer (bonding coating layer) has not been completed by the visual check, instead of repeating Step S15 and its subsequent steps, removal treatment of the protective layer (bonding coating layer) using a grinding tool such as a grinder can be performed. On the other hand, if it is determined that removal of the protective layer (bonding coating layer) has been completed, the protective-layer removing process is finished. Thereafter, a damage maintenance work and a re-coating work of the protective layer are performed to the turbine blade 1 according to need, and if the maintenance work has been completed, the turbine blade 1 is reinstalled in the gas turbine.

Subsequently, the fouling cleaning process performed at Steps S12 and S17 are described in detail with reference to FIG. 4. In the following descriptions, "fouling" refers to the water-soluble scale adhering to the turbine blade 1 during operation of the gas turbine in the fouling cleaning process performed at Step S12, and refers to the blasted particles used in the cleaning process at Step S16 in the fouling cleaning process performed at Step S17.

In the fouling cleaning process, the turbine blade 1 is first supported so that the longitudinal direction (the up-and-down direction in FIG. 1) is along the vertical direction (Step S21). At this time, the blade tip 2T of the turbine blade 1 is on the upper side in the vertical direction. However, "the longitudinal direction is along the vertical direction" includes not only a case where the longitudinal direction and the vertical direction coincide with each other, but also a case where the longitudinal direction has a certain angle with respect to the vertical direction, that is, the turbine blade 1 is inclined with a certain angle.

Next, the ultrasonic cleaning treatment in which the turbine blade 1 supported as described above is cleaned by the ultrasonic cleaning device 12 is performed (Step S22). In the present embodiment, the ultrasonic cleaning device 12 includes a water basin in which a transmitter and an oscillator are installed (each of which is not illustrated). In the ultrasonic cleaning treatment, the turbine blade 1 is immersed in the water basin in which the transmitter and the oscillator are installed, and ultrasonic waves are generated and conducted in the water basin by the transmitter and the oscillator, thereby enabling to peel fouling adhering to the surface of the turbine blade 1. Accordingly, fouling on the inner wall surfaces of the internal cooling flow channels 5 can be favorably peeled. Further, in this treatment, fouling on the external surface of the turbine blade 1 can be also peeled. Particularly in the fouling cleaning process (the scale cleaning process) at Step S12, this treatment effectively works in that the water-soluble scale adhering to the external surface of the turbine blade 1 where the top coating layer is not applied, such as the platform 3 and the shank 4, can be peeled. After performing the ultrasonic cleaning treatment, the turbine blade 1 pulled out from the water basin is delivered to the next process in the supported posture at Step S21. In this manner, by performing the ultrasonic cleaning treatment in a state where the turbine blade 1 is supported so that the longitudinal direction is along the vertical direction, immersion of the turbine blade 1 into the water basin and pulling out of the turbine blade 1 from the water basin can be performed more easily.

Subsequently, the pressurized-water cleaning treatment in which cleaning is performed by spraying pressurized water into the internal cooling flow channels 5 of the turbine blade 1 using the pressurized-water cleaning device 13 is performed (Step S23). In the present embodiment, in a state where the turbine blade 1 is supported so that the longitudinal direction is along the vertical direction and the blade tip 2T is on the upper side in the vertical direction, spray nozzles of pressurized water are inserted into the respective openings in the blade tips 2T of the internal cooling flow channels 5, and the pressurized water is sprayed directly into the internal cooling flow channels 5. Accordingly, fouling remaining in the internal cooling flow channels 5, including the fouling that cannot be peeled by the ultrasonic cleaning treatment, is washed away evenly from the blade tip 2T to the blade root by the pressurized water (peeled off from the inner wall surfaces), and is discharged to the outside of the turbine blade 1 (the internal cooling flow channels 5) via the openings in the blade root. This treatment is preferable for removing fouling from the blade including complicated internal cooling flow channels such as the serpentine flow channels of the turbine blade 1 according to the present embodiment. The spray nozzles of pressurized water do not necessarily have to be inserted into the openings of the internal cooling flow channels 5 (can be sprayed from a place away from the openings). Further, in this treatment, the pressurized water can be sprayed not only to the internal cooling flow channels 5 but also toward the outer periphery of the turbine blade 1.

In the pressurized-water cleaning treatment, as described above, pressurized water is sprayed into the internal cooling flow channels 5 from the openings in the blade tip 2T located on the upper side in the vertical direction, in a state where the turbine blade 1 is supported so that the longitudinal direction is along the vertical direction. Accordingly, fouling in the internal cooling flow channels 5 can be washed away from the upper side to the lower side in the vertical direction and removed more favorably. Further, the first ultrasonic cleaning treatment and the first pressurized-water cleaning treatment (Steps S22 and S23) when fouling remains in a large amount in the internal cooling flow channels 5 are performed in a state where the turbine blade 1 is supported so that the blade tip 2T is on the upper side in the vertical direction. Accordingly, when the turbine blade 1 is pulled out from the water basin in the ultrasonic cleaning treatment and when the pressurized-water cleaning treatment is performed, it can be favorably suppressed that fouling clogs the internal cooling flow channels 5 on the blade tip 2T side, where the flow channels are narrowed down as compared with the blade root side.

Further, a support direction is switched so that the upper and lower sides in the vertical direction of the turbine blade 1 are inverted (Step S24), the ultrasonic cleaning treatment and the pressurized-water cleaning treatment are performed again (Steps S25 and S26), and lastly, the turbine blade 1 is put in hot water and air is blown to the turbine blade 1 (Step S27), to finish the fouling cleaning process. In this manner, by repeating the ultrasonic cleaning treatment and the pressurized-water cleaning treatment twice, fouling can be more favorably removed from the turbine blade 1. In addition, in the present embodiment, after the support direction is switched so that the upper and lower sides in the vertical direction of the turbine blade 1 are inverted at Step S24, the second ultrasonic cleaning treatment and the second pressurized-water cleaning treatment are performed. That is, in the pressurized-water cleaning treatment at Step S23, pressurized water is sprayed from the openings in the blade tip 2T into the internal cooling flow channels 5, whereas in the pressurized-water cleaning treatment at Step S26, pressurized water is sprayed from the openings in the blade root into the internal cooling flow channels 5. As a result, because the flow direction of pressurized water to be supplied into the internal cooling flow channels 5 can be changed before and after the pressurized-water cleaning treatment for the first time and the second time, fouling in the internal cooling flow channels 5 can be removed quite favorably.

In this manner, in the protective-layer removing process according to the present embodiment, by performing the fouling cleaning process (the scale cleaning process) at Step S12, water-soluble scale adhering to the portion to which the top coating layer is not applied, mainly in the internal cooling flow channels 5, can be favorably removed by a simpler method that does not use complicated and various types of chemical treatment and water washing treatment, before applying heat treatment to the turbine blade 1 in the residual-stress removing process at Step S13. Further, as described above, water-soluble scale adhering to the portion to which the top coating layer is applied has been removed together with the top coating layer in the top coating-layer removing process. Therefore, in the heat treatment for removing residual stress, occurrence of high-temperature corrosion in the turbine blade 1 can be favorably suppressed.

In the protective-layer removing process according to the present embodiment, by performing the fouling cleaning process (a blasted-particles cleaning process) at Step S17, blasted particles used in the cleaning process at Step S16 can be favorably removed from the internal cooling flow channels 5 of the turbine blade 1 during the period until a series of processes for removing the protective layer from the turbine blade 1 are completed. As a result, in the maintenance work of the turbine blade 1 performed after the protective-layer removing process and a reinstallation work of the turbine blade 1 after completion of the maintenance work, occurrence of a trouble caused by the blasted particles remaining in the turbine blade 1 can be favorably suppressed. In the present embodiment, the turbine blades 1 used in the front stages are set as the maintenance object. However, when blades including the internal cooling flow channels having a simple configuration to be generally used in the rear stages are the maintenance object, execution of the fouling cleaning process at Step S17 can be omitted because it is considered that the blasted particles hardly remain in the internal cooling flow channels.

As described above, in the protective-layer removing process as the turbine blade maintenance method according to the present embodiment of the present invention, the fouling cleaning process (the scale cleaning process) is performed (Step S12), before applying the heat treatment for removing residual stress (Step S13) to the turbine blade 1. In the fouling cleaning process (the scale cleaning process), the ultrasonic cleaning treatment in which the turbine blade 1 is immersed in the water basin and ultrasonic waves are conducted into the water basin to clean the turbine blade 1 (Steps S22 and S25), and the pressurized-water cleaning treatment in which after performing the ultrasonic cleaning treatment, pressurized water is sprayed into the internal cooling flow channels 5 (Steps S23 and S26) are performed. Accordingly, water-soluble scale adhering to the outer periphery of the turbine blade 1 and to the inner wall surfaces of the internal cooling flow channels 5 can be favorably peeled by the ultrasonic cleaning treatment. Subsequently, water-soluble scale remaining in the internal cooling flow channels 5 can be removed more reliably by the pressurized-water cleaning treatment. Therefore, according to the present embodiment, in the maintenance process of the turbine blade 1 including the internal cooling flow channels 5 for circulating a refrigerant, water-soluble scale adhering to the turbine blade 1 can be favorably removed by a simpler method, before applying the heat treatment to the turbine blade 1. However, in the fouling cleaning process (Step S17), the ultrasonic cleaning treatment and the pressurized-water cleaning treatment can be performed only once by omitting the treatment at Steps S24 to S26, or the ultrasonic cleaning treatment and the pressurized-water cleaning treatment can be performed three times or more. After performing the ultrasonic cleaning treatment, water is discharged from the water basin, and the pressurized-water cleaning treatment can be performed in the water basin.

In the protective-layer removing process according to the present embodiment, the turbine blade 1 includes the protective layer consisting of the bonding coating layer (first coating layer) applied to the external surface and the top coating layer (second coating layer) applied to the outside of the bonding coating layer, and the top coating layer (second coating layer) removing process (Step S11) for removing the top coating layer by the blast treatment is included before the residual-stress removing process (Step S13). Accordingly, water-soluble scale adhering to the top coating layer is favorably removed together with the top coating layer by the blast treatment (Step S11) for removing the top coating layer, before applying the heat treatment for removing the residual stress (Step S13) to the turbine blade 1. On the other hand, water-soluble scale adhering to the outer periphery and the internal cooling flow channels 5 of the turbine blade 1 other than the top coating layer, which cannot be removed by the blast treatment, is favorably removed by the fouling cleaning process (Step S12) before applying the heat treatment for removing the residual stress (Step S13) to the turbine blade 1. Therefore, the turbine blade maintenance method according to the embodiment of the present invention is preferable for application to the turbine blade 1 including the top coating layer.

However, either the top coating-layer removing process (Step S11) or the fouling cleaning process (Step S12) can be performed first, so long as it is performed before the residual-stress removing process (Step S13). Further, the turbine blade maintenance method of the present invention can be applied to a turbine blade that does not have the top coating layer. In this case, the top coating-layer removing process at Step S11 is omitted from the protective-layer removing process. However, because the outer periphery of the turbine blade can be cleaned as well by the ultrasonic cleaning treatment in the fouling cleaning process at Step S12, if the fouling cleaning process is performed, water-soluble scale adhering to the turbine blade that does not have the top coating layer, including the blade portion can be favorably removed.

In the protective-layer removing process according to the embodiment, the turbine blade 1 is a rotor blade, and the internal cooling flow channels 5 open in the blade tip 2T and the blade root of the turbine blade 1, and in the pressurized-water cleaning treatment (Steps S23 and S26), pressurized water is sprayed into the internal cooling flow channels 5 from any one of the openings in the blade tip 2T and the openings in the blade root. As a result, water-soluble scale adhering to the internal cooling flow channels 5 can be favorably removed evenly from the blade tip 2T to the blade root. However, application of the present invention is not limited to the rotor blade, and when the present invention is applied to a turbine vane, pressurized water can be supplied from openings that can supply pressurized water to the internal cooling flow channels.

In the protective-layer removing process according to the embodiment, in the pressurized-water cleaning treatment (Steps S23 and S26), pressurized water is sprayed from any one of the openings in the blade tip 2T and the openings in the blade root, which is located on the upper side in the vertical direction, in a state where the turbine blade 1 is supported so that the longitudinal direction is along the vertical direction. As a result, water-soluble scale adhering to the internal cooling flow channels 5 can be washed away from the upper side to the lower side in the vertical direction and favorably removed by spraying pressurized water. In the present embodiment, the ultrasonic cleaning treatment and the pressurized-water cleaning treatment are performed in a state where the turbine blade 1 is supported so that the longitudinal direction is along the vertical direction. However, both of or either one of the ultrasonic cleaning treatment and the pressurized-water cleaning treatment can be performed in a state where the turbine blade 1 is supported so that the longitudinal direction is along a horizontal direction.

In the protective-layer removing process according to the embodiment, in the fouling cleaning process (the scale cleaning process), the support direction of the turbine blade 1 is changed so that the upper and lower sides in the vertical direction of the turbine blade 1 are inverted (Step S24) with respect to the previous pressurized-water cleaning treatment (Step S23), the next pressurized-water cleaning treatment (Step S26) is performed. As a result, in the case where the pressurized-water cleaning treatment is performed plural times, the flow direction of the pressurized water supplied into the internal cooling flow channels 5 can be changed. Therefore, water-soluble scale adhering to the internal cooling flow channels 5 can be removed quite favorably. In the present embodiment, the support direction of the turbine blade 1 is changed before the second ultrasonic cleaning treatment (Step S25). However, the treatment at Step S24 can be performed at least between the first pressurized-water cleaning treatment (Step S23) and the second pressurized-water cleaning treatment (Step S26). Further, in the case where the ultrasonic cleaning treatment and the pressurized-water cleaning treatment are performed plural times, the treatment at Step S24 can be omitted each time when the treatments are performed, can be performed each time when the treatments are performed between the first pressurized-water cleaning treatment and the second pressurized-water cleaning treatment, or can be performed only at arbitrary times. Further, after the pressurized-water cleaning treatment is performed once, the treatment at Step S24, that is, switching of the support direction of the turbine blade 1 is performed, and then the pressurized-water cleaning treatment can be performed continuously.

In the protective-layer removing process according to the embodiment, in the fouling cleaning process (the scale cleaning process), the first pressurized-water cleaning treatment (Step S23) is performed in a state where the turbine blade 1 is supported so that the blade tip 2T is on the upper side in the vertical direction. Accordingly, it can be suppressed more favorably that water-soluble scale clogs the internal cooling flow channels 5 on the blade tip 2T side where the flow channel is generally narrowed down as compared with the blade root side. However, in a state where the turbine blade 1 is supported so that the blade root side is on the upper side in the vertical direction, the first pressurized-water cleaning treatment (Step S23) and the first ultrasonic cleaning treatment (Step S22) can be performed.

### Reference Signs List

- 1: TURBINE BLADE
- 2: BLADE PORTION
- 2T: BLADE TIP
- 3: PLATFORM
- 4: SHANK
- 5: INTERNAL COOLING FLOW CHANNEL
- 10: PROTECTIVE LAYER REMOVING SYSTEM
- 11: BLASTING DEVICE
- 12: ULTRASONIC CLEANING DEVICE
- 13: PRESSURIZED-WATER CLEANING DEVICE
- 14: HEAT TREATMENT DEVICE
- 15: BLASTING DEVICE
- 16: CLEANING DEVICE
- 17: BLASTING DEVICE
- 18: HEAT TREATMENT DEVICE

## Claims

1. A turbine blade maintenance method, the turbine blade (1) including internal cooling flow channels (5) for circulating a refrigerant, the turbine blade maintenance method comprising:
a scale cleaning process where ultrasonic cleaning treatment in which the turbine blade (1) is immersed in a water basin and ultrasonic sound waves are conducted into the water basin to clean the turbine blade (1), and pressurized-water cleaning treatment in which pressurized water is sprayed into the internal cooling flow channels (5) after performing the ultrasonic cleaning treatment are performed at least once; and
a residual-stress removing process where heat treatment is performed so as to remove residual stress in the turbine blade (1) after performing the scale cleaning process,
wherein the turbine blade (1) includes a protective layer consisting of a first coating layer applied to an external surface and a second coating layer applied to outside of the first coating layer, and
the turbine blade maintenance method comprises a second coating-layer removing process for removing the second coating layer by blast treatment before the residual-stress removing process.

2. The turbine blade maintenance method according to claim 1, wherein
the turbine blade (1) is a rotor blade,
the internal cooling flow channels (5) open in a blade tip (2T) and a blade root of the turbine blade (1), and
in the pressurized-water cleaning treatment, pressurized water is sprayed into the internal cooling flow channels (5) from any one of openings in the blade tip (2T) and openings in the blade root.

3. The turbine blade maintenance method according to claim 2, wherein in the pressurized-water cleaning treatment, pressurized water is sprayed from one of the openings in the blade tip (2T) and the openings in the blade root in a state where the turbine blade (1) is supported so that a longitudinal direction is along the vertical direction, one of the openings being located on an upper side in a vertical direction.

4. The turbine blade maintenance method according to claim 3, wherein in the scale cleaning process, after a support direction is switched so that upper and lower sides in the vertical direction of the turbine blade (1) are inverted with respect to previous pressurized-water cleaning treatment, next pressurized-water cleaning treatment is performed.

5. The turbine blade maintenance method according to claim 3 or 4, wherein in the scale cleaning process, first pressurized-water cleaning treatment is performed in a state where the turbine blade (1) is supported so that the blade tip (2T) is on the upper side in the vertical direction.

## Patentansprüche

1. Ein Turbinenschaufel-Wartungsverfahren, wobei die Turbinenschaufel (1) interne Kühlungsströmungskanäle (5) zum Zirkulieren eines Kühlmittels aufweist, wobei das Turbinenschaufel-Wartungsverfahren umfasst:
einen Ablagerungsreinigungsprozess, wo eine Ultraschall-Reinigungsbehandlung, bei der die Turbinenschaufel (1) in ein Wasserbecken eingetaucht wird und Ultraschall-Schallwellen in das Wasserbecken zum Reinigen der Turbinenschaufel (1) geleitet werden, und eine Druckwasser-Reinigungsbehandlung, bei der Druckwasser nach dem Ausführen der Ultraschall-Reinigungsbehandlung in die internen Kühlungsströmungskanäle (5) eingespritzt wird, zumindest einmal ausgeführt werden, und
einen Restspannungs-Entfernungsprozess, wo eine Wärmebehandlung so ausgeführt wird, dass Restspannung in der Turbinenschaufel (1) nach dem Ausführen des Ablagerungs-Prozesses entfernt wird,
wobei die Turbinenschaufel (1) eine Schutzschicht aufweist bestehend aus einer ersten Beschichtungslage, die auf eine Außenoberfläche aufgebracht ist, und einer zweiten Beschichtungslage, die auf die Außenseite der ersten Beschichtungslage aufgebracht ist, und
das Turbinenschaufel-Wartungsverfahren einen zweiten Beschichtungslagen-Entfernungsprozess zum Entfernen der zweiten Beschichtungslage durch eine Strahlbehandlung vor dem Restspannungs-Entfernungsprozess aufweist.

2. Das Turbinenschaufel-Wartungsverfahren gemäß Anspruch 1, wobei
die Turbinenschaufel (1) eine Rotorschaufel ist,
die internen Kühlungsströmungskanäle (5) in einem Schaufelaußenende (2T) und einem Schaufelfuß der Turbinenschaufel (1) offen sind, und
bei der Druckwasser-Reinigungsbehandlung Druckwasser in die internen Kühlungsströmungskanäle (5) von irgendeiner von Öffnungen in dem Schaufelaußenende (2T) und Öffnungen in dem Schaufelfuß eingespritzt wird.

3. Das Turbinenschaufel-Wartungsverfahren gemäß Anspruch 2, wobei bei der Druckwasser-Reinigungsbehandlung Druckwasser von einer der Öffnungen in dem Schaufelaußenende (2T) und den Öffnungen in dem Schaufelfuß in einem Zustand eingespritzt wird, wo die Turbinenschaufel (1) so gelagert ist, dass eine Längsrichtung entlang der vertikalen Richtung ist und sich eine der Öffnungen an einer oberen Seite in einer vertikalen Richtung befindet.

4. Das Turbinenschaufel-Wartungsverfahren gemäß Anspruch 3, wobei bei dem Ablagerungs-Reinigungsprozess, nachdem eine Lagerungsrichtung so geändert wurde, dass obere und untere Seiten in der vertikalen Richtung der Turbinenschaufel (1) bezüglich der vorausgehenden Druckwasser-Reinigungsbehandlung invertiert sind, eine nächste Druckwasser-Reinigungsbehandlung ausgeführt wird.

5. Das Turbinenschaufel-Wartungsverfahren gemäß Anspruch 3 oder 4, wobei bei dem Ablagerungs-Reinigungsprozess eine erste Druckwasser-Reinigungsbehandlung in einem Zustand ausgeführt wird, wo die Turbinenschaufel (1) so gelagert ist, dass das Schaufelaußenende (2T) sich an der oberen Seite in der vertikalen Richtung befindet.

## Revendications

1. Procédé d'entretien d'une aube de turbine, l'aube (1) de turbine comprenant des canaux (5) internes de refroidissement par écoulement pour faire circuler un réfrigérant, le procédé d'entretien d'une aube de turbine comprenant :
une opération de nettoyage du tartre, dans laquelle un traitement de nettoyage par ultrasons, dans lequel l'aube (1) de turbine est immergée dans un bassin d'eau et des ondes ultrasoniques sont envoyées dans le bassin d'eau pour nettoyer l'aube (1) de turbine, et un traitement de nettoyage par de l'eau sous pression, dans lequel de l'eau sous pression est pulvérisée dans les canaux (5) internes de refroidissement par écoulement après avoir effectué le traitement de nettoyage par ultrasons, sont effectués au moins une fois et
une opération d'élimination de la contrainte résiduelle, dans laquelle un traitement thermique est effectué de manière à éliminer une contrainte résiduelle dans l'aube (1) de turbine après avoir effectué l'opération de nettoyage du tartre,
dans lequel l'aube (1) de turbine comprend une couche protectrice consistant en une première couche de revêtement appliquée à une surface extérieure et en une deuxième couche de revêtement appliquée à l'extérieur de la première couche de revêtement, et
le procédé d'entretien d'une aube de turbine comprend une opération d'élimination de la deuxième couche de revêtement pour éliminer la deuxième couche de revêtement par traitement par soufflage avant l'opération d'élimination d'une contrainte résiduelle.

2. Procédé d'entretien d'une aube de turbine suivant la revendication 1, dans lequel
l'aube (1) de turbine est une aube de rotor,
les canaux (5) internes de refroidissement par écoulement débouchent dans un bout (2T) de l'aube et une emplanture de l'aube (1) de turbine, et
dans le traitement de nettoyage par de l'eau sous pression, de l'eau sous pression est pulvérisée dans les canaux (5) internes de refroidissement par écoulement par l'une quelconque des ouvertures dans le bout (2T) de l'aube et des ouvertures dans l'emplanture de l'aube.

3. Procédé d'entretien d'une aube de turbine suivant la revendication 2, dans lequel, dans le traitement de nettoyage par de l'eau sous pression, de l'eau sous pression est pulvérisée à partir de l'une des ouvertures dans le bout (2) de l'aube et des ouvertures dans l'emplanture de l'aube dans un état où l'aube (1) de la turbine est supportée, de manière à ce qu'une direction longitudinale soit suivant la direction verticale, l'une des ouvertures étant placée d'un côté supérieur dans une direction verticale.

4. Procédé d'entretien d'une aube de turbine suivant la revendication 3, dans lequel, dans l'opération de nettoyage du tartre, après avoir changé une direction de support de manière à inverser des côtés supérieur et inférieur dans la direction verticale de l'aube (1) de turbine, par rapport au traitement précédent de nettoyage par de l'eau sous pression, on effectue ensuite un traitement de nettoyage par de l'eau sous pression.

5. Procédé d'entretien d'une aube de turbine suivant la revendication 3 ou 4, dans lequel, dans l'opération de nettoyage du tartre, on effectue un premier traitement de nettoyage par de l'eau sous pression dans un état dans lequel l'aube (1) de turbine est supportée, de manière à ce que le bout (2T) de l'aube soit du côté supérieur dans la direction verticale.
